# FASCICULE DE BREVET EUROPEEN

(11) **EP 2 867 944 B1**
(45) Date de publication et mention de la délivrance du brevet: **23.11.2016**
(21) Numéro de dépôt: 13730586.8
(22) Date de dépôt: 24.06.2013
(51) Int. Cl.: H01M 8/04089, H01M 8/04082, H01M 8/04223, F17C 11/00

(54) **SYSTÈME D'ALIMENTATION DE PILE À COMBUSTIBLE**
BRENNSTOFFZELLENVERSORGUNGSSYSTEM
FUEL CELL SUPPLY SYSTEM

(30) Priorité: 27.06.2012 FR 1256090
(43) Date de publication de la demande: 06.05.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PAGANELLI, Gino, 63040 Clermont-Ferrand Cedex 9 (FR); OLSOMMER, David, 63040 Clermont-Ferrand Cedex 9 (FR)
(74) Mandataire: Roussy, Delphine
(86) Numéro de dépôt international: PCT/EP2013/063134
(87) Numéro de publication internationale: WO 2014/001253

(56) Documents cités:
- FR-A1- 2 952 232
- JP-A- 2001 214 206
- US-A1- 2009 214 906
- US-A1- 2010 143 810
- US-A1- 2011 003 222

## Description

### DOMAINE DE L'INVENTION

La présente invention concerne les piles à combustible, notamment les piles à combustible alimentées en hydrogène. De manière plus précise, la présente invention concerne un système d'alimentation de pile à combustible.

### ETAT DE LA TECHNIQUE

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles.

Une pile à combustible comporte en général l'association en série d'éléments unitaires qui, chacun, sont constitués essentiellement d'une anode et d'une cathode séparées par une membrane polymère permettant le passage d'ions de l'anode à la cathode. Cette association est également appelé empilement. Une pile à combustible comporte un circuit anodique, par lequel le carburant, par exemple de l'hydrogène, est apporté à l'anode, et un circuit cathodique, par lequel le comburant, par exemple de l'oxygène, est apporté à la cathode, lors des phases de fonctionnement de la pile.

En revanche, lorsque la pile à combustible est arrêtée, l'alimentation en carburant et en comburant de la pile est coupée. Or, on a constaté que la présence de carburant dans le circuit anodique de la pile, même lors des phases d'arrêt, permet de ralentir la dégradation de la pile, et ainsi d'en allonger la durée de vie. En effet, la présence d'hydrogène dans la pile permet de garantir une tension électrochimique nulle, et ainsi de prévenir des réactions électrochimiques parasites pendant les longues périodes où la pile reste arrêtée.

On connaît des piles à combustible dans lesquelles une présence d'hydrogène à l'anode lors de phases d'arrêt courtes est réalisée en terminant l'arrêt avec un excédent d'hydrogène dans le circuit anodique. Dans ce cas, le circuit cathodique est pressurisé avec de l'azote prélevé dans l'air. Toutefois, les piles à combustible connues ne permettent pas de réaliser une étanchéité parfaite de l'empilement. En effet, l'empilement est constitué de plaques bipolaires et d'assemblages membrane électrode, l'étanchéité entre les différents éléments étant assurée à l'aide de joints présentant une certaine perméabilité aux gaz. Ainsi, un gaz tel que l'hydrogène ou autre carburant présent à l'anode, a tendance à migrer vers l'extérieur de la pile au cours du temps. A l'inverse, l'air présent dans l'atmosphère a tendance à entrer dans l'anode, ce qui s'avère préjudiciable pour la durée de vie des piles à combustible. En effet, l'oxygène introduit avec l'air a tendance à réagir avec l'hydrogène en raison du catalyseur en présence dans la pile à combustible, ce qui tend à faire disparaitre l'hydrogène résiduel. Lorsque l'hydrogène a complètement disparu, l'oxygène impose alors son potentiel électrochimique de 1,48V sur les électrodes, ce qui favorise la corrosion.

Pour remédier à cet inconvénient, on a proposé une solution consistant, lorsque la concentration en hydrogène passe en dessous d'un certain seuil, à ouvrir le réservoir pour réintroduire une certaine pression d'hydrogène dans l'empilement. Cette solution, bien qu'efficace, n'est toutefois pas satisfaisante en terme de sûreté. En effet, elle impliquerait que le véhicule pourrait ouvrir la vanne principale du réservoir d'hydrogène sans présence humaine, ce qui se révèle dangereux.

On connaît également, de la demande WO2007/090284, des systèmes à pile à combustible comprenant un réservoir principal délivrant de l'hydrogène pendant une phase de fonctionnement de la pile à combustible et un réservoir secondaire délivrant de l'hydrogène lors de l'arrêt de la pile à combustible. Toutefois, le système décrit dans cette demande ne garantit pas le maintien d'une présence d'hydrogène jusqu'au redémarrage suivant.

Le document US2009/214906 divulgue un système d'alimentation du circuit anodique d'une pile à combustible comprenant des réservoirs primaires et secondaires, une membrane perméable étant installée sur le réservoir primaire.

L'objectif de la présente invention est de proposer une solution permettant de remédier à tout ou partie des problèmes précédemment exposés. A cet effet, la présente invention vise à proposer un système d'alimentation de pile à combustible permettant de garantir un niveau correct de carburant dans la pile en toute sécurité.

### BREVE DESCRIPTION DE L'INVENTION

Ainsi, la présente invention concerne un système d'alimentation du circuit anodique d'une pile à combustible comprenant :
- un réservoir primaire de carburant destiné à alimenter le circuit anodique lors d'une phase de fonctionnement de la pile à combustible,
- un réservoir secondaire de carburant destiné à alimenter le circuit anodique lorsque la pile à combustible est arrêtée,
les réservoirs primaires et secondaires étant installés de façon telle que le réservoir secondaire est rechargé par du carburant issu du réservoir primaire lors d'une phase de fonctionnement de la pile à combustible, et le système comprenant une membrane perméable installée entre le réservoir secondaire de carburant et le circuit anodique d'une pile à combustible.

Le réservoir primaire de carburant est un réservoir tel qu'existant sur les piles à combustible, contenant du carburant, par exemple de l'hydrogène. Dans la suite de la description, les exemples décrits concerneront des piles à hydrogène, mais l'invention couvre également l'utilisation de piles utilisant un autre carburant.

Le réservoir secondaire a une contenance moindre par rapport au réservoir primaire, puisque la quantité d'hydrogène à libérer pendant les phases d'arrêt est moins importante que la quantité d'hydrogène nécessaire au fonctionnement d'une pile. Par ailleurs, dans une réalisation de l'invention, le réservoir secondaire comporte des hydrures métalliques. Ainsi, l'hydrogène présent dans le réservoir secondaire est en plus petite quantité que dans le réservoir primaire, et il est absorbé dans des hydrures métalliques, ce qui garantit une sécurité du système puisque l'ouverture du réservoir secondaire ne peut pas engendrer de décharge rapide.

Le réservoir secondaire du système d'alimentation est placé de telle sorte que de l'hydrogène issu du réservoir primaire recharge les hydrures présents dans le réservoir secondaire, ce qui permet de stocker l'hydrogène sous une pression peu élevée, par exemple de l'ordre de quatre bars.

Dans une autre réalisation de l'invention, le système comprend une vanne d'entrée de la pile à combustible, permettant d'autoriser ou d'interdire l'alimentation du circuit anodique par le réservoir primaire de carburant. Ainsi, lorsque la pile est arrêtée, cette vanne est en position fermée, ce qui signifie que l'hydrogène contenu dans le réservoir primaire n'est pas transféré vers la pile à combustible.

Dans une réalisation particulière de l'invention, la vanne d'entrée de la pile à combustible est également installée sur le circuit reliant le réservoir secondaire au circuit anodique de la pile. Dans ce cadre, la membrane perméable est, de manière optionnelle, installée en parallèle de la vanne. En effet, dans cette réalisation, la vanne d'entrée de la pile à combustible, lorsqu'elle se trouve en position fermée, interdit l'accès de l'hydrogène à la pile à combustible, que ce soit en provenance du réservoir primaire ou secondaire. Dans une telle situation, et afin de garantir l'alimentation en hydrogène par le réservoir secondaire, il est utile de positionner la membrane perméable en parallèle de la vanne afin d'offrir un circuit alternatif pendant les phases d'arrêt de la pile.

De manière avantageuse, cette membrane perméable est, par exemple, installée directement dans le corps de la vanne d'entrée de la pile à combustible.

Cette membrane comprend, dans une réalisation de l'invention, une rondelle réalisée en un matériau polymère, par exemple du silicone et une grille installée sur chacune des faces de la rondelle. Ces éléments seront ultérieurement décrits en détail.

L'invention concerne également un système à pile à combustible comprenant une pile à combustible et un système d'alimentation selon l'invention.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre un système d'alimentation selon l'invention, alimentant une pile à combustible.
- La figure 2 est un graphique montrant des mesures de perméabilité effectuées sur différentes membranes.

### DESCRIPTION DU MEILLEUR MODE DE REALISATION DE L'INVENTION

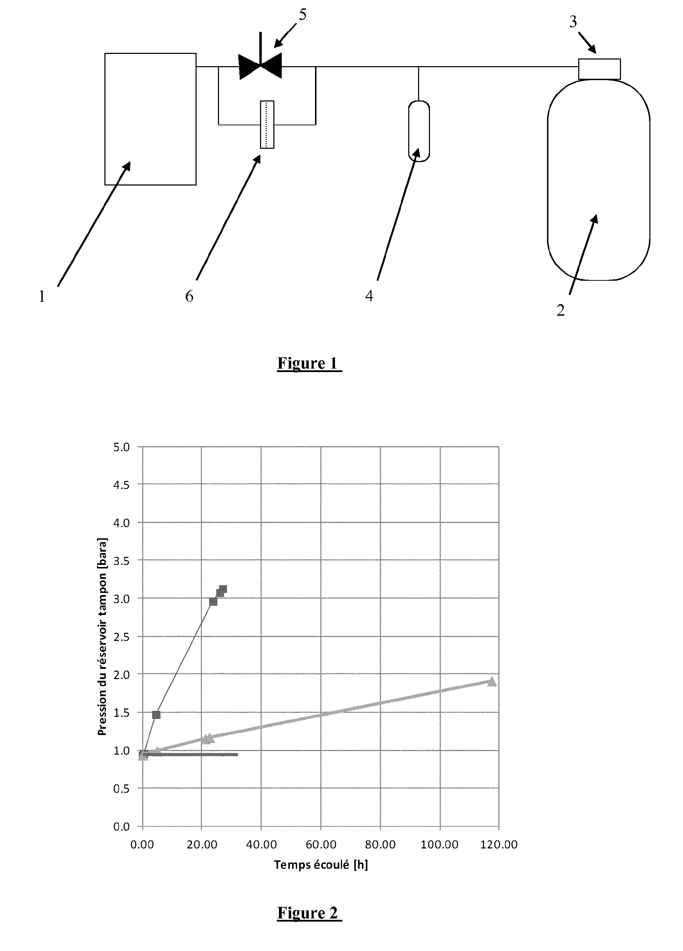

La figure 1 montre un système d'alimentation selon l'invention, destiné à alimenter une pile à combustible 1. Cette pile à combustible est, par exemple, une pile de type hydrogène/oxygène, ou hydrogène/air, c'est-à-dire que l'hydrogène est le carburant, et que le comburant est de l'oxygène pur ou de l'air.

Le système d'alimentation comprend un réservoir primaire 2, dans lequel de l'hydrogène est stocké sous pression, par exemple sous une pression de huit bars. Le réservoir primaire comprend un élément 3 jouant à la fois le rôle de vanne pour l'ouverture et la fermeture du réservoir, et également de détendeur pour libérer l'hydrogène sous une pression moindre que huit bars.

Le système comprend en outre un réservoir secondaire 4 comprenant des hydrures métalliques, permettant de stocker l'hydrogène. Comme montré sur la figure, le réservoir secondaire 4 est situé sur la ligne d'alimentation reliant le réservoir primaire 2 à la pile à combustible, ce qui permet un rechargement du réservoir secondaire 4 pendant les phases de fonctionnement de la pile. En effet, le type d'hydrure présent dans le réservoir secondaire est choisi, par exemple, de façon à se recharger à une pression au-delà de quatre bars, à 24°C. Ainsi, si la pression dans la ligne d'alimentation est de l'ordre de huit bars, le rechargement s'effectuera lors du fonctionnement de la pile.

Le système comprend en outre une membrane perméable 6 installée en parallèle de la vanne 5 d'entrée de la pile à combustible. Lors d'un arrêt de la pile à combustible, la vanne 5 est fermée, mais la membrane 6 permet de libérer lentement de l'hydrogène issu du réservoir secondaire 4 vers le circuit anodique de la pile à combustible. Cette membrane perméable, également appelée membrane à perméabilité calibrée est, selon les exemples de réalisations, montée en parallèle comme sur la figure, ou montée directement dans le corps de la vanne d'entrée 5.

La membrane perméable est dimensionnée de manière préférentielle pour résister à une pression de huit bars présente dans la ligne d'alimentation. En effet, comme on peut le constater sur la figure 1, en phase de fonctionnement, la membrane est soumise à la pression de l'hydrogène issu du réservoir primaire 2 et alimentant la pile à combustible. Par ailleurs, la membrane est dimensionnée de manière à offrir un compromis entre la vitesse de libération de l'hydrogène et la compensation des pertes d'hydrogène.

La figure 2 est un graphique montrant des mesures de perméabilité effectuées sur différentes membranes. La courbe supérieure correspond à une membrane à fibres de verre et silicone, d'épaisseur 0,25mm. La courbe du milieu correspond à une membrane silicone uniquement, d'épaisseur 0,25mm, et la courbe inférieure correspond à une membrane silicone uniquement, d'épaisseur 0,41mm. Ces graphiques représentent l'évolution de la pression dans la pile à combustible, dans le cas idéal où celle-ci serait parfaitement étanche. Pour les besoins de l'essai, afin de quantifier la perméabilité des différentes membranes, la pile à combustible a été remplacée par un réservoir tampon de volume équivalent à celui de la pile à combustible, et la pression de ce réservoir tampon a été relevée au cours du temps. La mesure de pression ainsi effectuée permet de déterminer la quantité d'hydrogène libéré, et donc d'en déduire la perméabilité de la membrane testée.

Si la membrane présente une perméabilité trop élevée, comme montré sur la courbe supérieure, l'hydrogène est libéré trop rapidement dans la pile à combustible. Cela signifie que le réservoir secondaire doit être dimensionné plus largement, pour garantir une présence d'hydrogène pendant toute la phase d'arrêt de la pile. Or, l'utilisation d'un réservoir trop grand peut s'avérer dangereuse, comme dans les systèmes connus de l'état de la technique.

Si, au contraire, la membrane présente une perméabilité trop faible, comme sur la courbe inférieure, l'hydrogène n'est pas libéré en quantité suffisante pour compenser les pertes d'hydrogène de l'empilement vers l'extérieur, et ne permet donc pas de garantir une présence d'hydrogène dans l'empilement.

Ainsi, dans un exemple avantageux, la membrane comporte une rondelle de silicone d'épaisseur 0,25 mm et de diamètre 20mm. Cette rondelle de silicone comporte, sur chacune de ses faces, une grille inox de diamètre 15mm, permettant de diffuser l'hydrogène sur la surface. La rondelle et les grilles sont avantageusement enserrées de manière étanche entre deux pièces cylindriques.

## Revendications

1. Système d'alimentation du circuit anodique d'une pile à combustible (1) comprenant :
• un réservoir primaire de carburant (2) destiné à alimenter le circuit anodique lors d'une phase de fonctionnement de la pile à combustible,
• un réservoir secondaire de carburant (4) destiné à alimenter le circuit anodique lorsque la pile à combustible est arrêtée,
les réservoirs primaires et secondaires sont installés de façon telle que le réservoir secondaire est rechargé par du carburant issu du réservoir primaire lors d'une phase de fonctionnement de la pile à combustible, et le système étant **caractérisé en ce qu'**il comprend une membrane perméable (6) installée entre le réservoir secondaire de carburant et le circuit anodique d'une pile à combustible.

2. Système d'alimentation selon la revendication 1, **caractérisé en ce que** le réservoir secondaire (4) comporte des hydrures métalliques.

3. Système selon la revendication 1 ou 2, **caractérisé en ce qu'**il comprend une vanne d'entrée (5) permettant d'autoriser ou d'interdire l'alimentation du circuit anodique par le réservoir primaire de carburant.

4. Système selon la revendication 3, **caractérisé en ce que** la membrane (6) est installée en parallèle de la vanne.

5. Système selon la revendication 3 ou 4, **caractérisé en ce que** la membrane perméable (6) est installée directement dans le corps de la vanne d'entrée.

6. Système selon l'une des revendications précédentes, **caractérisé en ce que** la membrane perméable comprend une rondelle en un matériau polymère et une grille installée sur chacune des faces de la rondelle.

7. Système selon la revendication 6, dans lequel la rondelle est en silicone.

8. Système selon la revendication 6 ou 7, **caractérisé en ce que** la rondelle de silicone et les grilles sont enserrés de manière étanche entre deux pièces cylindriques.

9. Système selon l'une des revendications 6 à 8, **caractérisé en ce que** la rondelle de silicone présente une épaisseur de 0.25 millimètres.

10. Système selon l'une des revendications précédentes, **caractérisé en ce que** la membrane est dimensionnée pour résister à une pression de 8 bars sans se rompre.

11. Système à pile à combustible comprenant une pile à combustible et un système d'alimentation selon l'une des revendications 1 à 10.

## Patentansprüche

1. Versorgungssystem des Anodenkreises einer Brennstoffzelle (1), das enthält:
• einen Kraftstoff-Primärbehälter (2), der dazu bestimmt ist, den Anodenkreis in einer Betriebsphase der Brennstoffzelle zu versorgen,
• einen Kraftstoff-Sekundärbehälter (4), der dazu bestimmt ist, den Anodenkreis zu versorgen, wenn die Brennstoffzelle abgeschaltet ist,
wobei die Primär- und Sekundärbehälter so eingebaut sind, dass der Sekundärbehälter während einer Betriebsphase der Brennstoffzelle mit vom Primärbehälter stammendem Kraftstoff aufgeladen wird, und das System **dadurch gekennzeichnet ist, dass** es eine durchlässige Membran (6) enthält, die zwischen dem Kraftstoff-Sekundärbehälter und dem Anodenkreis einer Brennstoffzelle eingebaut ist.

2. Versorgungssystem nach Anspruch 1, **dadurch gekennzeichnet, dass** der Sekundärbehälter (4) Metallhydride aufweist.

3. System nach Anspruch 1 oder 2, **dadurch gekennzeichnet, dass** es ein Eingangsventil (5) enthält, das es ermöglicht, die Versorgung des Anodenkreises durch den Primärbehälter zu erlauben oder zu verbieten.

4. System nach Anspruch 3, **dadurch gekennzeichnet, dass** die Membran (6) parallel zum Ventil eingebaut ist.

5. System nach Anspruch 3 oder 4, **dadurch gekennzeichnet, dass** die durchlässige Membran (6) direkt in den Körper des Eingangsventils eingebaut ist.

6. System nach einem der vorhergehenden Ansprüche, **dadurch gekennzeichnet, dass** die durchlässige Membran eine Scheibe aus Polymermaterial und ein Gitter enthält, das auf jeder der Seiten der Scheibe eingebaut ist.

7. System nach Anspruch 6, wobei die Scheibe aus Silikon ist.

8. System nach Anspruch 6 oder 7, **dadurch gekennzeichnet, dass** die Silikonscheibe und die Gitter dicht zwischen zwei zylindrischen Bauteilen eingeklemmt sind.

9. System nach einem der Ansprüche 6 bis 8, **dadurch gekennzeichnet, dass** die Silikonscheibe eine Dicke von 0,25 Millimeter aufweist.

10. System nach einem der vorhergehenden Ansprüche, **dadurch gekennzeichnet, dass** die Membran bemessen ist, einem Druck von 8 Bar zu widerstehen, ohne zu reißen.

11. Brennstoffzellensystem, das eine Brennstoffzelle und ein Versorgungssystem nach einem der Ansprüche 1 bis 10 enthält.

## Claims

1. Supply system of the anode circuit of a fuel cell (1) comprising:
• a primary fuel tank (2) intended to supply the anode circuit during an operating phase of the fuel cell,
• a secondary fuel tank (4) intended to supply the anode circuit when the fuel cell is shut down,
the primary and secondary tanks are installed so that the secondary tank is recharged with fuel from the primary tank during an operating phase of the fuel cell, and the system being **characterized in that** it comprises a permeable membrane (6) installed between the secondary fuel tank and the anode circuit of a fuel cell.

2. Supply system according to Claim 1, **characterized in that** the secondary tank (4) comprises metal hydrides.

3. System according to Claim 1 or 2, **characterized in that** it comprises an inlet valve (5) that makes it possible to allow or prevent the supplying of the anode circuit by the primary fuel tank.

4. System according to Claim 3, **characterized in that** the membrane (6) is installed in parallel to the valve.

5. System according to Claim 3 or 4, **characterized in that** the permeable membrane (6) is installed directly in the body of the inlet valve.

6. System according to one of the preceding claims, **characterized in that** the permeable membrane comprises a disc made of a polymer material and a grid installed on each of the faces of the disc.

7. System according to Claim 6, in which the disc is made of silicone.

8. System according to Claim 6 or 7, **characterized in that** the silicone disc and the grids are held in a leaktight manner between two cylindrical parts.

9. System according to one of Claims 6 to 8, **characterized in that** the silicone disc has a thickness of 0.25 millimetres.

10. System according to one of the preceding claims, **characterized in that** the membrane is sized to withstand a pressure of 8 bar without breaking.

11. Fuel cell system comprising a fuel cell and a supply system according to one of Claims 1 to 10.
